# EUROPEAN PATENT APPLICATION

(11) **EP 2 684 711 A1**
(43) Date of publication of application: **15.01.2014**
(21) Application number: 12755747.8
(22) Date of filing: 06.03.2012
(51) Int. Cl.: B60B 27/00, B21K 1/05, B60B 35/02, F16C 33/58

(54) **ROLLING BEARING DEVICE FOR WHEEL**

(30) Priority: 07.03.2011 JP 2011048902
(71) Applicant: JTEKT Corporation, Osaka-shi, Osaka 542-8502 (JP)
(72) Inventor: NAKAO, Motonori, Osaka-shi Osaka 542-8502 (JP)
(74) Representative: Winter, Brandl, Fürniss, Hübner, Röss, Kaiser, Polte - Partnerschaft
(86) International application number: PCT/JP2012/055671
(87) International publication number: WO 2012/121244

(57) **Abstract**

A flange portion provided on a shaft member of a rolling bearing device for a wheel includes an outer flange portion; and an inner flange portion formed thicker than the outer flange portion as seen in a cross section. The inner flange portion is formed into a concavely-curved-inclining-surface-shape in which a flange surface shape on a side where a bolt seat surface portion for the hub bolt is disposed is such that the thickness of the inner flange portion gradually decreases as it extends radially outwards from a radially proximal end portion. The concavely-curved-inclining-surface-shape is formed as a surface shape in which the thickness of the inner flange portion decreases uniformly as it extends radially outwards with respect to a width direction the flange portion.

## Description

### TECHNICAL FIELD

The present invention relates to a rolling bearing device for a wheel.

### BACKGROUND ART

Conventionally, there are known rolling bearing devices which include a shaft member having a shaft portion on an outer circumferential surface of which an inner ring raceway surface is formed, a fitting shaft portion which is formed at one end of this shaft portion, and a plurality of flange portion that are positioned between the shaft portion and the fitting shaft portion, which extend radially outwards in a radial direction and in which bolt holes in which hub bolts are disposed are provided to penetrate therethrough, and such rolling bearing devices are disclosed, for example, in Patent Document 1 and Patent Document 2.
Shaft members of rolling bearing devices disclosed in Patent Document 1 and Patent Document 2 are both formed through a sideways extrusion process in cold forging. Although a production method is also conventionally known for forming a shaft member of a rolling bearing device through hot forging, a surface of a shaft member formed through hot forging is not accurate to dimension and becomes rough. Additionally, oxidation or decarburization is produced in the surface. Therefore, a portion of the surface of the shaft member so formed where a dimensional accuracy is required needs machining. In contrast, it is known that a shaft member of a rolling bearing device whose surface is formed accurate to dimension can be obtained through cold forging. In addition, by employing the cold forging process, it is possible to form flange portions only in positions where wheel tightening hub bolts are disposed. Therefore, compared with a conventional circularly formed flange portion, a reduction in weight of the rolling bearing device can be realized.

In Patent Document 1, the thickness-wise shape of the flange portions when the shaft member of the rolling bearing device is seen in a cross section along an axial direction thereof is constant. In view of a further reduction in weight of the shaft member of the rolling bearing device, there is still room for improvement with respect to the thickness-wise shape of the flange portions when the shaft member is seen in a cross section along the axial direction. Thus, it is considered that the flange portions of the shaft member of the rolling bearing device disclosed in Patent Document 1 are formed thinner to realize a reduction in weight thereof.

However, the rolling bearing device including this shaft member is mounted on a suspension system of a vehicle body in order to support a wheel rotatably. Thus, a load in association with a turning of a vehicle is applied on the shaft member of the rolling bearing device as a bending load to thereby repeatedly generate stress in the flange portions of the shaft member. Additionally, a load applied from the wheel while the vehicle is running is inputted through the hub bolts in the flange portions of the shaft member, and stress associated with the load is concentrated near the hub bolts. Therefore, the flange portions of the shaft member are constructed so that stress is concentrated thereto in a remarkable fashion. Thus, in view of the concentration of stress to the flange portions of the shaft member, there are fears that the strength of the flange portions becomes insufficient in an event that the thickness of the flange portions is reduced uniformly.

In contrast with this, the thickness-wise shape of the flange portions of the shaft member of the rolling bearing device disclosed in Patent Document 2 when the shaft member of the rolling bearing device is seen in a cross section along an axial direction thereof is formed so that a proximal end portion is formed thick, while positions where hub bolt seat surface portions are disposed are formed thinner compared with the proximal end portion.

### Related Art Documents

### Patent Documents

Patent Document 1: JP-A-2006-111070
Patent Document 2: JP-A-2008-45718

### SUNIMARY OF INVENTION

### Problem that the Invention is to Solve

However, in a sideways extrusion process in the general cold forging, when a material is extruded sideways without being restricted by a die, the material is extruded sideways as in substantially the same shape as an outside diameter of the material before it is extruded sideways, and the portion which is extruded sideways comes to have a projecting shape. In addition, in general, a proximal end portion of a flange portion is formed into a seal sliding surface where a distal end portion of a seal member which is provided on an outer ring member which is disposed to face oppositely an inner ring raceway surface slides. Here, the proximal end portion of the shaft member of the rolling bearing device disclosed in Patent Document 2 has a circular shape which is a shape that ensures a sliding locus of the distal end portion of the seal member and whose axis is the same as the axis of the shaft portion. Namely, when the proximal end portion of the flange portion of the shaft member is seen in a cross section along a radial direction, the proximal end portion is formed into a projecting shape which projects radially outwards. Thus, the proximal end portion of the flange portion does not have a uniform proximal end portion relative to a width direction of the flange portion. Then, when the load associated with the turning of the vehicle or the load applied from the wheel while the vehicle is running is given to the shaft member, there are fears that a local concentration of stress (a stress concentration) is generated in part of the proximal end portions of the flange portions of the shaft member.

Thus, the invention has been made in view of the fact described above. In a rolling bearing device for a wheel which includes a shaft member having a shaft portion on an outer circumferential surface of which an inner ring raceway surface is formed, a fitting shaft portion which is formed at one end of the shaft portion, and a plurality of flange portions that are positioned between the shaft portion and the fitting shaft portion, which extend radially outwards in a radial direction and in which bolt holes in which hub bolts are disposed are provided so as to penetrate therethrough, a problem that the invention is to solve is how to realize a reduction in weight without reducing the strength of the flange portions which are formed through cold forging and how to suppress a local concentration of stress (a stress concentration) which is generated in the flange portions by loads inputted into the flange portions.

### Means for Solving the Problem

With a view to solving the problem, a rolling bearing device according to aspects of the invention adopts the following means.

In accordance with one aspect of the invention, a rolling bearing device for a wheel includes a shaft member. The shaft member includes a shaft portion on an outer circumferential surface of which an inner ring raceway surface is formed, a fitting shaft portion formed at one end side of the shaft portion, and a plurality of flange portions that are positioned between the shaft portion and the fitting shaft portion and that extend radially outwards in a radial direction, wherein a bolt hole in which a hub bolt is arranged penetrates through each of the flange portions. The flange portions are formed by cold forging. The each of the flange portions includes an outer flange portion provided in a radially outward area where the bolt hole penetrates therethrough, and an inner flange portion provided in a radially inward area which extends radially inwards and continuously from the outer flange portion. The inner flange portion is formed thicker than the outer flange portion as seen in a cross section in an axial direction. A thickness-wise shape of the inner flange portion is formed into a concavely-curved-inclining-surface-shape in which a flange surface shape on a side where a bolt seat surface portion for the hub bolt is disposed is such that the thickness of the inner flange portion gradually decreases as it extends radially outwards from a radially proximal end portion, so that the inner flange portion is thickest on a range of predetermined length in the radial direction in the radially proximal end portion and the inner flange portion gradually decreases in thickness as it extends radially outwards. The concavely-curved-inclining-surface-shape that is formed at the inner flange portion is formed as a surface shape in which the thickness of the inner flange portion decreases uniformly as it extends radially outwards with respect to a width direction which intersects an extending direction of the flange portion at right angles.

According to this aspect, the inner flange portion is formed thicker than the outer flange portion as seen in the cross section along the axial direction. Additionally, in the thickness-wise shape of the inner flange portion, the range of predetermined length in the radial direction in the position of the radially proximal end portion is made thickest. By adopting this configuration, the proximal end portion of the flange portion where the concentration of stress occurs easily is formed thick, thereby making it possible to prevent the reduction in strength at the flange portion.

In addition, the outer flange portion is formed thinner than the inner flange portion, thereby making it possible to realize a reduction in weight. Additionally, the flange surface shape on the side where the bolt seat surface portion of the hub bolt is disposed is formed into the concavely-curved-inclining-surface-shape in which the thickness of the inner flange portion gradually decreases as it extends radially outwards from the position of the radially proximal end portion, and this concavely-curved-inclining-surface-shape which is formed at the inner flange portion is formed as the surface shape in which the thickness of the inner flange portion decreases uniformly as it extends radially outwards with respect to the width direction which interests the extending direction of the flange portion at right angles. By adopting this configuration, the shape of the proximal end portion of the flange portion becomes uniform with respect to the width direction of the flange portion as seen in the cross section along the axial direction, and the proximal end portion is formed into the concavely-curved-inclining-surface-shape which is free from a drastic change in shape from the inner flange portion towards the outer flange portion, thereby making it possible to suppress the occurrence of a local concentration of stress (a stress concentration) in the flange portion. Thus, the reduction in weight of the rolling bearing device can be attained without reducing the strength at the flange portions, and the local concentration of stress (the stress concentration) can be suppressed that would otherwise be generated by the loads inputted into the flange portions.

### Advantage of the Invention

According to the invention, by adopting the means described above, the reduction in weight of the rolling bearing device can be attained without reducing the strength at the flange portions, and the local concentration of stress (the stress concentration) can be suppressed that would otherwise be generated by the loads inputted into the flange portions.

### BRIEF DESCRIPTION OF DRAWINGS

Fig. 1 is an axially sectional view showing a rolling bearing device for wheel according to an embodiment of the invention.
Fig. 2 is a plan view showing a shaft member of the rolling bearing device according to the embodiment of the invention as seen from a side of a forged recess portion.
Fig. 3 is an axially sectional view showing the shaft member of the rolling bearing device according to the embodiment of the invention.
Fig. 4 is an explanatory diagram showing a production process of the shaft member of the rolling bearing device according to the embodiment of the invention.

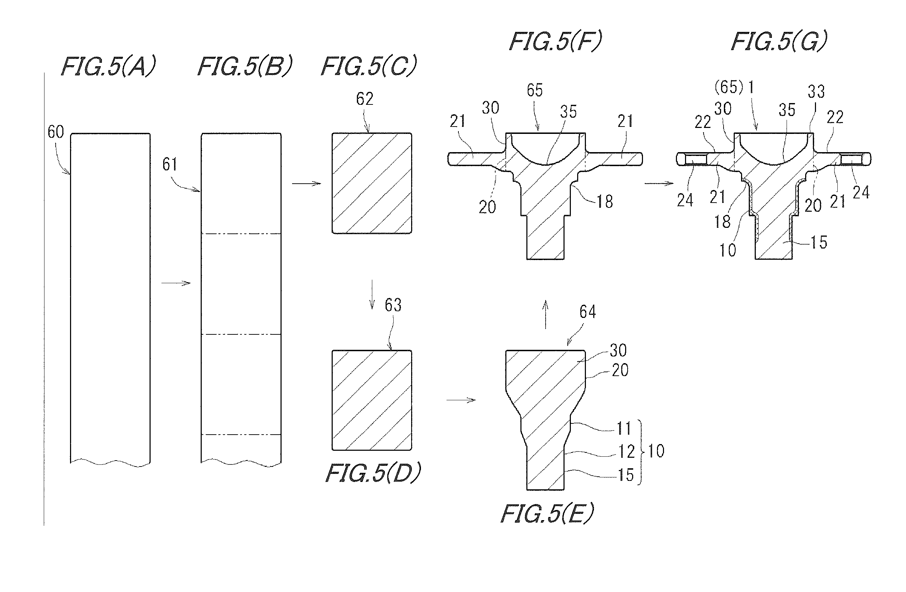

Figs. 5(A) to 5(G) show step diagrams of the production process of the shaft member of the rolling bearing device according to the embodiment of the invention, showing changes in shape of the shaft member in respective steps until the shaft member is completed from a shaft-shaped material. Fig. 5(A) is a step diagram showing a long round rod material, Fig. 5(B) is a step diagram showing the long round rod material that is spheroidize-annealed and from an outer circumferential surface of which a decarburized layer is removed by peeling, Fig. 5(C) is a step diagram showing a shaft-shaped material which is cut to a predetermined length from the long round rod material, Fig. 5(D) is a step diagram showing the shaft-shaped material to which a coating treatment has been applied, Fig. 5(E) is a step diagram showing a primary cold forged part, Fig. 5(F) is a step diagram showing a secondary cold forged part, and Fig. 5(G) is a step diagram showing a polished shaft member.
Fig. 6 is an overall perspective view of the shaft member of the rolling bearing device according to the embodiment of the invention.
Fig. 7 is an axially sectional view showing a flange portion of the shaft member of the rolling bearing device according to the embodiment of the invention in an enlarged fashion.
Fig. 8 is an axially sectional view showing an inner flange portion of the flange portion of the shaft member of the rolling bearing device according to the embodiment of the invention in an enlarged fashion.
Fig. 9 is a plan view showing the shaft member of the rolling bearing device according to the embodiment of the invention as seen from the side of a shaft portion.

### DESCRIPTION OF EMBODIMENTS

A mode for carrying out the invention will be described based on an embodiment.

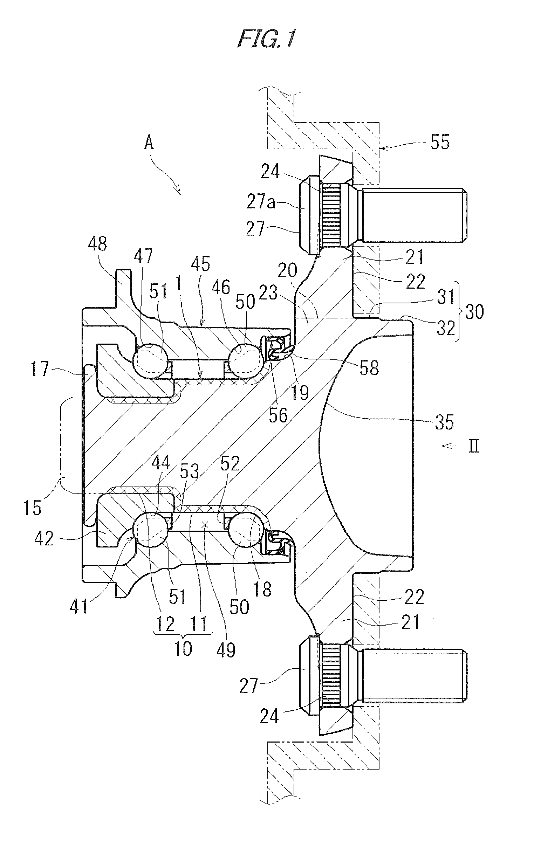

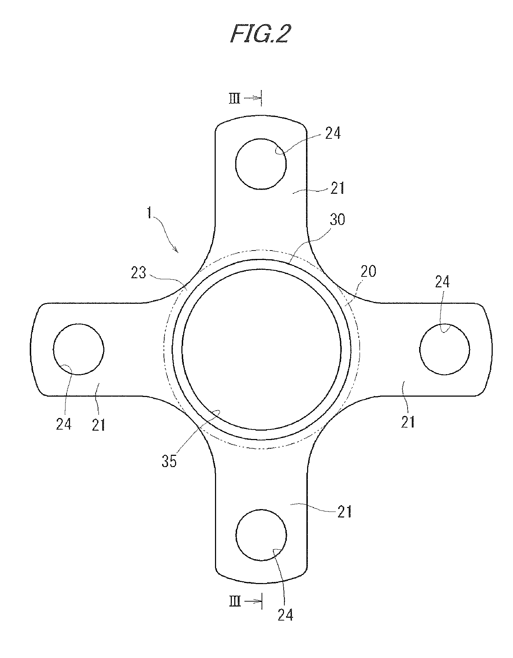

An embodiment of the invention will be described according to Figs. 1 to 9.

As shown in Fig. 1, a wheel hub unit as a rolling bearing device for wheel A is formed into a unit including integrally a shaft member 1 of the rolling bearing device A and double row angular ball bearings 41.

The shaft member 1 of the rolling bearing device A includes integrally a shaft portion 10, a fitting shaft portion 30 that is formed at one end of the shaft portion 10, which has a diameter larger than that of the shaft portion 10 and on which a center bore of a wheel (not shown) is fitted, a flange base portion 23 which is positioned between the shaft portion 10 and the fitting shaft portion 30 and a plurality of flange portions 21 which are provided on an outer circumferential surface of the flange base portion 23 so as to extend radially outwards in a radial direction.

In addition, bolt holes 24 in which wheel tightening hub bolts 27 are disposed through press fitting are provided individually in the plurality of flange portions 21 so as to penetrate therethrough.

Additionally, a brake rotor fitting portion 31 is formed on a flange portion 21 side of the fitting shaft portion 30 so as to correspond to a brake rotor 55, and a wheel fitting portion 32 is formed on a distal end side thereof that is slightly smaller in diameter than the brake rotor fitting portion 31 and which corresponds to the wheel.

In addition, in this embodiment, the shaft portion 10 of the shaft member 1 of the rolling bearing device A is formed into a stepped shaft shape which is formed larger in diameter on the flange portion 21 side and smaller in diameter on the distal end side thereof. Additionally, an inner ring raceway surface 18 for one of the double row angular ball bearings 41 as rolling bearings is formed on an outer circumferential surface of a large-diameter portion 11 of the shaft portion 10.

Additionally, an inner ring element 42 which has an inner ring raceway surface 44 for the other of the double row angular ball bearings 41 on an outer circumferential surface thereof is fitted on an outer circumferential surface of a small-diameter portion 12 of the shaft portion 10. Further, an end shaft portion 15 having the same diameter as that of the small-diameter portion 12 is provided at a distal end portion of the shaft portion 10 so as to extend therefrom. A distal end portion of this end shaft portion 15 is crimped radially outwards so as to be formed into a crimped portion 17, whereby the inner ring element 42 is fixed to the outer circumferential surface of the small-diameter portion 12.

An outer ring member 45 is disposed on an outer circumferential surface of the shaft portion 10 of the shaft member 1 of the rolling bearing device A with an annular space 49 defined therebetween.

Outer ring raceway surfaces 46, 47 are formed on an inner circumferential surface of the outer ring member 45 so as to be spaced axially apart at a predetermined interval to thereby correspond to the inner ring raceway surfaces 18, 44 of the shaft member 1 of the rolling bearing device A, respectively. In addition, pluralities of rolling elements (balls) 50, 51 are disposed between the inner ring raceway surfaces 18, 44 and the outer ring raceway surfaces 46, 47 while being held apart in place by corresponding cages 52, 53 so as to roll therebetween.

It should be noted that a predetermined axial pressure is preloaded to the pluralities of rolling elements (balls) 50, 51 which are disposed between the inner ring raceway surfaces 18, 44 and the outer ring raceway surfaces 46, 47 based on a crimping force applied in forming the crimped portion 17 by crimping the end shaft portion 15 of the shaft portion 10.

Additionally, a vehicle body side flange 48 is formed integrally at an axially central portion of an outer circumferential surface of the outer ring member 45. This vehicle body side flange 48 is fastened to a mounting surface of a vehicle body side member such as a knuckle or a carrier which is supported on a suspension system (not shown) of the vehicle with bolts.

In addition, a seal member 56 is assembled to an inner circumferential surface of one end portion of the outer ring member 45 through press fitting, and a distal end portion of a lip 58 of this seal member 56 is brought into sliding contact with a seal surface 19 which is formed adjacent to a shoulder portion of the inner ring raceway surface 18 of the shaft member 1 of the rolling bearing device A.

Next, the shape of the flange portion 21 will be described in detail. Since the configuration of the shape of the flange portion 21 is briefly classified into a "plan view as seen from the side of the shaft portion" and a "shape as seen in the cross section along an axial direction" with respect to the shaft portion 10 of the shaft member 1 of the rolling bearing device A, the respective configurations will be described as below.

### <Plan view as seen from the side of the shaft portion 10 of the shaft member 1 of the rolling bearing device A>

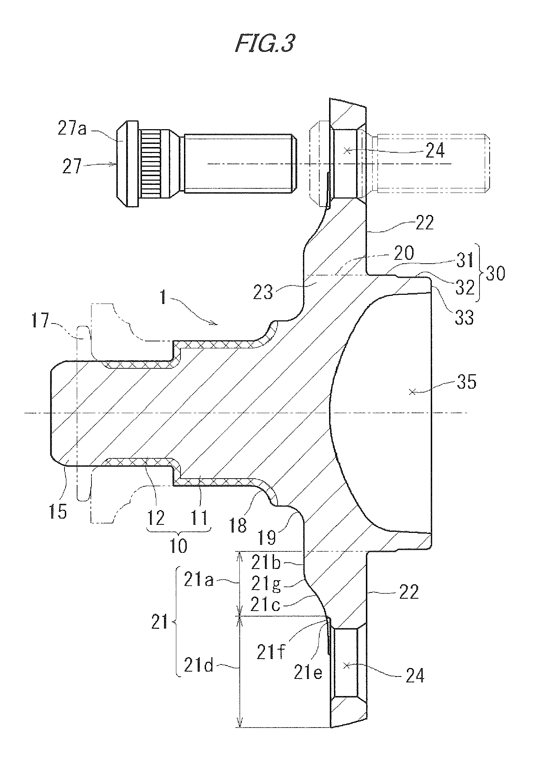

As shown in Figs. 3 and 6 to 9, briefly speaking, the flange portion 21 is made up of an inner flange portion 21a and outer flange portion 21d. This outer flange portion 21 d is a portion which is disposed and formed in a radially outward area where the bolt hole 24 is provided so as to penetrate therethrough. Additionally, the inner flange portion 21 a is a portion which is disposed and formed in a radially inward area which is formed to extend radially inwards and continuously from the outer flange portion 21d. In addition, when the inner flange portion 21a and the outer flange portion 21 d are seen in the cross section along the axial direction of the shaft portion 10, the inner flange portion 21 a is formed thicker than the outer flange portion 21 d.

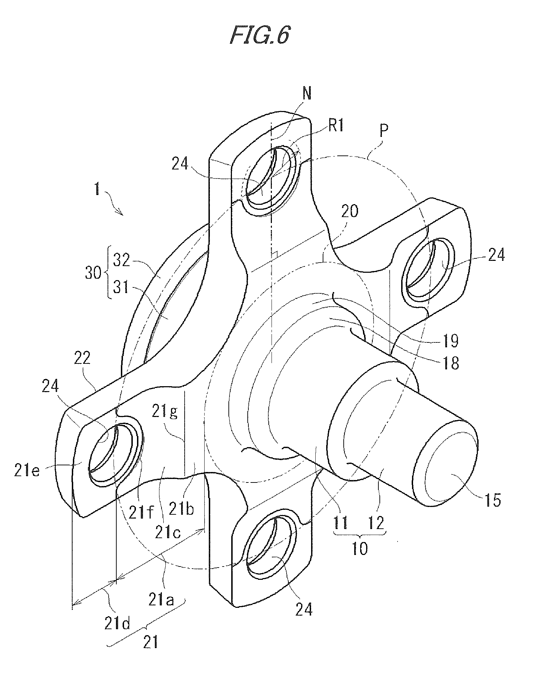

As shown in Figs. 3 and 6, the thickness-wise shape of this inner flange portion 21a is formed so that a range of predetermined length in a radial direction in the position of a radially proximal end portion becomes thickest and so that the inner flange portion 21a gradually decreases in thickness as it extends radially outwards. To describe this in detail, in the position of a radially proximal end portion of the shaft portion 10, a flange surface on a side where a bolt seat surface supporting surface 21 e is provided on which a bolt seat surface portion 27a (refer to Fig. 3) of a hub bolt 27 is supported is formed into a perpendicular surface 21 b that is perpendicular to the shaft portion 10 and which extends over a predetermined length in a radial direction. Further, as it extends radially outwards from the position of a proximal end portion of the perpendicular surface 21 b, the flange surface is formed into a concavely curved surface portion 21c (a concavely-curved-inclining-surface-shape) in which the inner flange portion 21 a gradually decreases in thickness as it extends so.

This concavely curved surface portion 21c (the concavely-curved-inclining-surface-shape) is formed into a surface shape in which the thickness of the inner flange portion decreases uniformly as it extends radially outwards with respect to a width direction which intersects at right angles to a normal N (the extending portion of the flange portion 21) which passes through a center of the bolt hole 24 which lies on a pitch circle P which is produced by connecting centers of the bolt holes 24 which are provided in the plurality of flange portions 21 so as to penetrate therethrough. In addition, a rotor supporting surface 22, which constitutes an opposite flange surface, is formed into a perpendicular surface which is parallel to the perpendicular surface 21 b.

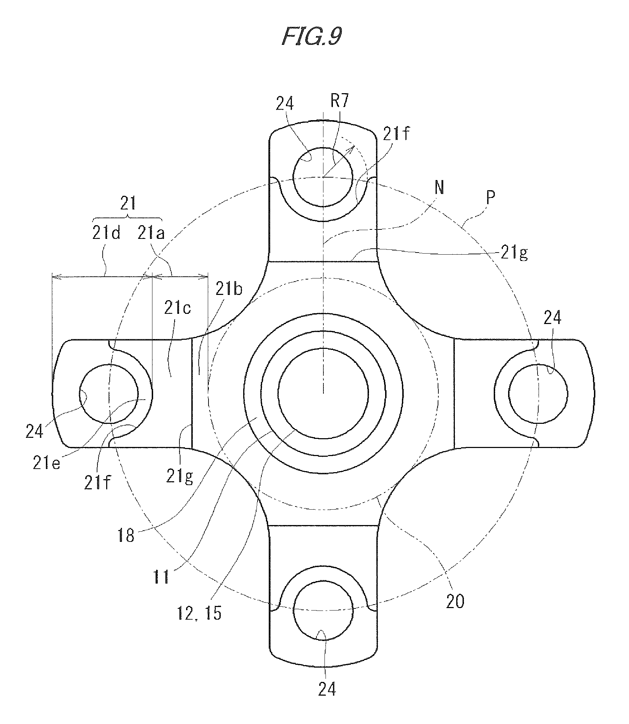

As shown in Fig. 9, a first flange surface joint portion 21f between the concavely curved surface portion 21 c (the concavely-curved-inclining-surface-shape) which is formed on the inner flange portion 21 a and the outer flange portion 21 d is formed as a concavely curvilinear portion which surrounds the hold hole 24 for the hub bolt 27 when the shaft member 1 of the rolling bearing device A is seen from the side of the shaft portion 10. To describe this in detail, the concavely curvilinear portion is formed by a single arc shape of a radius of curvature R1 which is larger than the radius of the bolt hole 24. The center of this radius of curvature R1 is not limited to the same position as the center of the bolt hole 24 but may be positioned radially outwards of the pitch circle P on the normal N (the extending direction of the flange portion 21) which passes through the center of the bolt hole 24 on the pitch circle P which is produced by connecting the centers of the bolt holes 24 which are provided in the plurality of flange portions 21 so as to penetrate therethrough.

Additionally, a second flange surface joint portion 21 g between the concavely curved surface portion 21c (the concavely-curved-inclining-surface-shape) of the inner flange portion 21 a and the perpendicular surface 21 b is formed as a straight line portion which intersects the normal N (the extending direction of the flange portion 21) at right angles.

It is desirable that the first flange surface joint portion 21f has the same center as the center of the bolt hole 24 and is formed by the single arc shape which is larger than the bolt hole 24. Additionally, the concavely curved surface portion is not limited to the single arc shape but may be formed by a combination of arcs.

### <Shape of the flange portion 21 as seen in the cross section along the axial direction of the shaft portion 10>

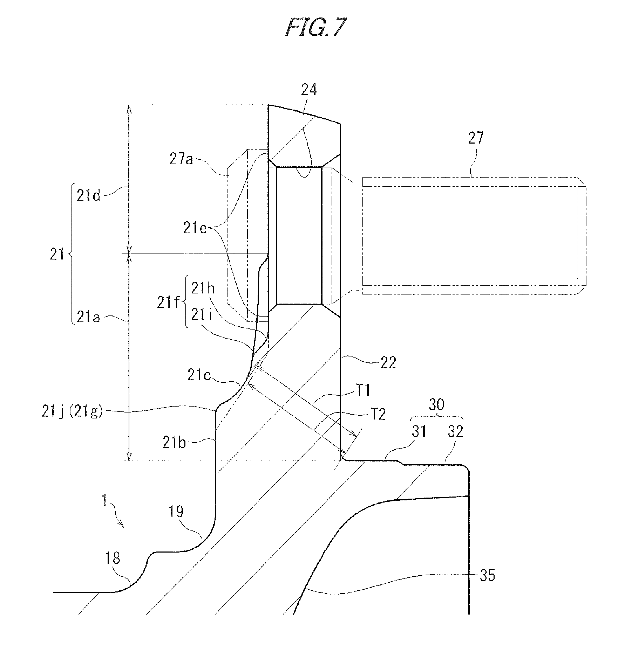

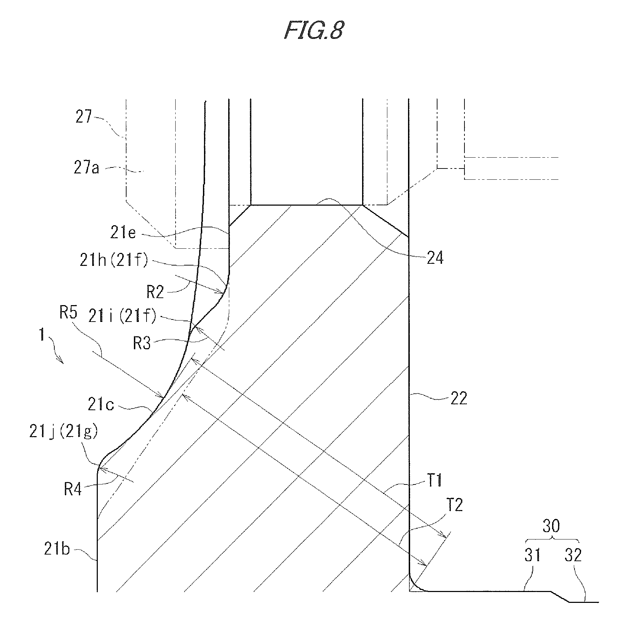

As shown in Figs. 7 and 8, as seen in the cross section along the axial direction of the shaft portion 10, a flange surface shape defined from the perpendicular surface 21 b which constitutes the position of the proximal end portion of the flange portion 21 to the outer flange portion 21d is formed as the concavely curved surface portion 21c (the concavely-curved-inclining-surface-shape) which is a curved surface of a radius of curvature R5 in which the thickness of the inner flange portion 21 a gradually decreases. This concavely curved surface portion 21 c (the concavely-curved-inclining-surface-shape) is formed continuously in a width direction of the flange portion 21. Namely, it is formed to extend continuously in the direction which intersects the normal N (the extending direction of the flange portion 21) at right angles (refer to Fig. 6). In addition, the concavely curved surface portion 21c (the concavely-curved-inclining-surface-shape) is formed in such a relation that the radius of curvature R5 thereof becomes larger than a radius of curvature R2 of a concavely curved surface portion 21 h.

Additionally, the concavely curved surface portion 21 c (the concavely-curved-inclining-surface-shape) connects continuously to the outer flange portion 21 d by way of the concavely curved surface portion 21 h, and a convexly curved surface portion 21i is formed radially inwards of the concavely curved surface portion 21 h so as to be continuously joined to the concavely curved surface portion 21 h. Specifically, when the joint between the concavely curved surface portion 21c (the concavely-curved-inclining-surface-shape) and the bolt seat surface supporting surface 21 e (that is, the first flange surface joint portion 21f) is seen in the cross section along the axial direction of the shaft portion 10, the bolt seat surface supporting surface 21 e and the concavely curved surface portion 21 h of the radius of curvature R2 are joined together and a radially inward side of the concavely curved surface portion 21 h is joined to the concavely curved surface portion 21c (the concavely-curved-inclining-surface-shape) by the convexly curved surface portion 21 i of a radius of curvature R3. Here, the convexly curved surface portion 21i is formed in such a relation that the radius of curvature R3 thereof is smaller than the radius of curvature R2 of the concavely curved surface portion 21 h. By adopting this configuration, the flange portion 21 is formed into a step shape in which the concavely curved surface portion 21 c (the concavely-curved-inclining-surface-shape) of the inner flange portion 21 a is thicker than the bolt seat surface supporting surface 21 e of the outer flange portion 21 d.

In addition, when the joint between the perpendicular surface 21 b and the concavely curved surface portion 21c (the concavely-curved-inclining-surface-shape) (that is the second flange surface joint portion 21 g) is seen in the cross section along the axial direction of the shaft portion 10, the perpendicular surface 21 b and the concavely curved surface portion 21 c (the concavely-curved-inclining-surface-shape) are joined together by a convexly curved surface portion 21j of a radius of curvature R4. The radius of curvature R4 of this convexly curved surface portion 21j is such that the convexly curved surface portion 21j is formed into a convexly curved surface shape so as to prevent the occurrence of stress concentration, and an appropriate radius of curvature can be selected as the radius of curvature R4. In this embodiment, as the radius of curvature R4 of the convexly curved surface portion 21j, the same radius of curvature as the radius of curvature R3 of the convexly curved surface portion 21i is selected.

In this way, according to the rolling bearing device A of this embodiment, the inner flange portion 21 a is formed thicker than the outer flange portion 21 d when seen in the cross section along the axial direction. In addition, in the thickness-wise shape of this inner flange portion 21 a, the range of predetermined length in the radial direction in the position of the radially proximal end portion is formed thickest. By adopting this configuration, the proximal end portion of the flange portion 21 where the stress concentration tends to easily occur is made thick, thereby making it possible to prevent the reduction in strength at the flange portion 21.

Additionally, a reduction in weight can be realized by forming the outer flange portion 21d thinner than the inner flange portion 21a. In addition, the flange surface shape on the side where the bolt seat surface portion 27a of the hub bolt 27 is disposed is formed into the concavely curved surface portion 21 c (the concavely-curved-inclining-surface-shape) in which the thickness of the inner flange portion 21 a gradually decreases as it extends radially outwards from the position of the radially proximal end portion. Then, the convexly curved surface portion 21 c (the convexly curvilinear inclined surface shape) formed on the inner flange portion 21 a is formed into the surface shape in which the thickness of the inner flange portion decreases uniformly as it extends radially outwards with respect to the width direction which intersects the extending direction of the flange portion 21 at right angles. By adopting this configuration, the shape of the proximal end portion of the flange portion 21 is formed uniform with respect to the width direction of the flange portion 21 when seen in the cross section along the radial direction and is formed into the concavely curved surface portion 21 c (the concavely-curved-inclining-surface-shape) which is free from drastic change in shape from the inner flange portion 21 a towards the outer flange portion 21 d. Therefore, a local concentration of stress (a stress concentration) can be prevented that would otherwise be generated in the flange portion 21. Thus, the reduction in weight can be realized without reducing the strength at the flange portion, and the local stress concentration (the stress concentration) can be suppressed that would otherwise be generated in the flange portion 21 due to the load inputted into the flange portion 21.

In addition, the first flange surface joint portion 21f which lies at a boundary portion between the outer flange portion 21 d and the inner flange portion 21 a is formed into the step shape which surrounds the bolt seat surface portion 27a of the hub bolt 27 and in which the inner flange portion 21 a is thicker than the outer flange portion 21 d. By adopting this configuration, since the variation in distance from the center of the hub bolt 27 to the first flange surface joint portion 21f can be reduced, can the local stress concentration (the stress concentration) be suppressed which would otherwise be generated in the flange portion due to the load inputted thereinto, but also the portion of the hub bolt 27 where the bolt seat surface portion 27a is formed can be formed thin, thereby making it possible to realize the reduction in weight.

Additionally, it is desirable that the concavely curved portion is formed by the single arc shape of the radius of curvature R1 which is larger than the radius of the bolt hole 24 and that the center of the radius of curvature R1 of the arc shape is positioned at the center of the bolt hole 24 or radially outwards of the pitch circle P on the normal N (the extending direction of the flange portion 21). By adopting this configuration, the local stress concentration (the stress concentration) can be suppressed which would otherwise be generated in the flange portion 21 due to the load inputted thereinto.

Additionally, as shown in Fig. 8, by disposing the convexly curved surface portion 21i and the concavely curved surface portion 21 h so as to connect continuously, the concavely curved surface portion 21 c (the concavely-curved-inclining-surface-shape) is prevented from interfering with the bolt seat surface supporting surface 21 e, and the thickness of the portion of the inner flange portion 21 a where the concavely curved surface portion 21 c (the concavely-curved-inclining-surface-shape) is formed can be increased by changing the position where the concavely curved surface portion 21 c (the concavely-curved-inclining-surface-shape) is disposed. Namely, in a general cold forging process, the shape in which the inclined surface of the inward flange and the bolt seat surface supporting surface 21 e are joined together takes a position indicated by an imaginary line in Fig. 8, and a distance between the inclined surface indicated by the imaginary line and a proximal end portion of the fitting shaft portion is T2. In contrast with this, in this embodiment, by disposing the convexly curved surface portion 21i and the concavely curved surface portion 21 h so as to connect continuously, a distance between the concavely curved surface portion 21 c (the concavely curved inclining surface portion) and a proximal end portion of the fitting shaft portion 30 is T1, which is longer than T2, whereby the inner flange portion 21 a of this embodiment can be thicker than the inner flange portion formed in the general cold forging process. Additionally, since the radius of curvature R2 of the concavely curved surface portion 21 h is larger than the radius of curvature R3 of the convexly curved surface portion 21 i, the stress concentration can be suppressed which would otherwise be generated in association with the load inputted from the hub bolt 27.

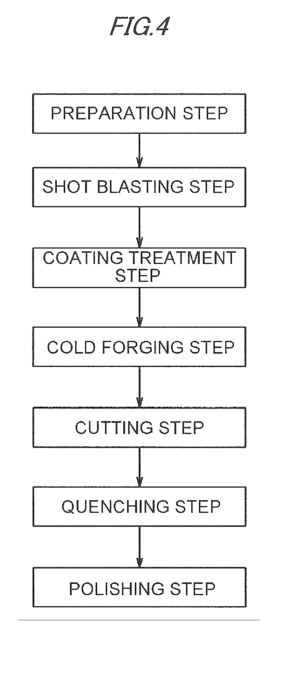

Next, a production method for producing the shaft member of the rolling bearing device A according to this embodiment will be described according to Figs. 4 and 5(A) to 5(G).

As shown in Fig. 4, the production method for producing the shaft member of the rolling bearing device A according to this embodiment includes a preparation step, a shot blasting step, a coating treatment step, a cold forging step, a cutting step, a quenching step and a polishing step.

Firstly, in the preparation step, a long round rod material is subjected to a spheroidize-annealing treatment, and a decarburized layer is removed therefrom by peeling to prepare a long material 61. Then, the resulting long material 61 is cut to a predetermined length to prepare a shaft-shaped material 62.

Namely, a long round rod material 60 made of a structural carbon steel (for example, S45C, S50C, S55C) containing approximately 0.5% carbon through hot rolling is subjected to a spheroidize-annealing treatment (softening) (refer to Fig. 5(A)).

Thereafter, a decarburized layer (a decarburized layer produced by hot rolling and spheroidize-annealing) on an outer circumferential surface of the long round rod material 60 is removed by peeling to prepare a long material 61 (refer to Fig. 5(B)).

Then, the long material 61 is cut to a predetermined length to thereby prepare a shaft-shaped material 62 (refer to Fig. 5(C)).

Next, in the shot blasting step, irregularities and rust on the surface of the shaft-shaped material 62 and burrs around the cut surface thereof are removed by a shot blasting apparatus.

Following this, in the coating treatment step, a coat of lubricant is formed on the surface of the shaft-shaped material 62 by coating the surface with a lubricant.

For example, the surface of the shaft-shaped material 62 is coated with phosphate as a lubricant to thereby form a coat of lubricant (a coat of phosphate), whereby a coated shaft-shaped material 63 is prepared (refer to Fig. 5(D)).

By forming the coat of lubricant on the surface of the shaft-shaped material 62, a frictional force generated between a die and the shaft-shaped material (the material) during cold forging is reduced.

The shaft-shaped material 63, which is subjected to the annealing treatment in the preparation step and to which the coating is applied in the coating treatment step, becomes a material having superior cold forging properties.

Next, the cold forging step includes a primary cold forging step and a secondary cold forging step.

In the primary cold forging step, the coated shaft-shaped material 63 is extruded forwards by employing a forging die system (not shown) for forward extrusion in cold forging to thereby form a shaft portion (including a large-diameter portion 11, a small-diameter portion 12 and an end shaft portion 15) 10, an intermediate shaft portion (including a flange base portion 23 and part of a fitting shaft portion 30) 20 and a fitting shaft portion (in this state, a forged recess portion 35 and a brake rotor fitting portion 31 are not formed) 30, whereby a primary cold forged part 64 is prepared through the forward extrusion in cold forging (refer to Fig. 5(E)).

Next, in the secondary cold forging step, a plurality of flange portions 21 are formed in a radial direction on an outer circumferential surface of the intermediate shaft portion (the flange base portion 23) 20 which is positioned between the shaft portion 10 and the fitting shaft portion 30 while forming a forged recess portion 35 in an end face of a central portion of the fitting shaft portion 30 of the primary cold forged part 64 by employing a forging die system (not shown) for sideways extrusion in cold forging, whereby a secondary cold forged part 65 is prepared (refer to Fig. 5(F)).

Next, in the cutting step, part of the secondary cold forged part (a shaft member 1) 65, for example, rotor supporting surfaces 22 which constitute one side surface of the flange portions 21 and an end face 33 of the fitting shaft portion 30 are cut as required, and bolt holes 24 are opened in the flange portions 21 (refer to Figs. 3 and 5(G)).

Additionally, the rotor supporting surfaces 22 which constitute the one side surface of the flange portions 21 are cut as required. Further, cutting is performed as required at a brake rotor fitting portion 31 and a wheel fitting portion 32 of the fitting shaft portion 30. Additionally, the brake rotor fitting portion 31 and the wheel fitting portion 32 of the fitting shaft portion 30 can also be formed at the same time as the secondary formed product 65 is cold forged.

Next, in the quenching (hardening and tempering) step, as shown by shaded portions in Figs. 3 and 5(G), a required portion of the secondary cold forged part 65 including the inner ring raceway surface 18 is partially hardened by induction hardening.

For example, in the shaft portion 10 of the secondary cold forged part 65, the inner ring raceway surface 18, part of the large-diameter portion 11 which lies adjacent to the inner ring raceway surface 18, an outer circumferential surface of the small-diameter portion 12 and a stepped surface between the large-diameter portion 11 and the small-diameter portion 12 are induction hardened and thereafter are tempered.

Finally, in the polishing step, a surface of the quenched portion (a surface of the shaded portions shown in Figs. 3 and 5(G)) of the secondary cold forged part 65 including the inner ring raceway surface 18 is polished to thereby prepare a shaft member 1.

Finally, as shown in Fig. 1, the pluralities of balls 50, 51, the cages 52, 53 and the outer ring member 45 are assembled to the outer circumferential surface of the shaft portion 10 of the shaft member 1 of the rolling bearing device A.

In addition, the inner ring element 42 if fitted on the outer circumferential surface of the small-diameter portion 12 of the shaft portion 10, whereafter the distal end portion of the end shaft portion 15 is crimped radially outwards to thereby form the crimped portion 17, whereby the inner ring element 42 is fixed to the outer circumferential surface of the small-diameter portion 12.

Additionally, before or after the angular ball bearings 41 are assembled to the outer circumferential surface of the shaft portion 10 of the shaft member 1 of the rolling bearing device A, the hub bolts 27 are press fitted into the bolt holes 24 from the side where the bolt seat surface supporting surface 21e is formed, whereby the hub bolts 27 are fixed to the flange portions 21. Thus, the rolling bearing device A is produced.

Although the illustration thereof is omitted here, a pulser ring (not shown) having detected portions (not shown) in a circumferential direction and corresponding to a speed sensor (not shown) is press fitted on an outer circumferential surface of the inner ring element 42 as required. As this occurs, a bottomed cylindrical cover member (not shown) is press fitted fixedly in an inner circumferential surface of an end portion of the outer ring member 45, and the speed sensor (not shown) is mounted on a lid portion (not shown) of the cover member (not shown) so that detecting portions face oppositely the corresponding detected portions (not shown) of the pulser ring (not shown).

The production method for producing the shaft member 1 of the rolling bearing device A according to this embodiment is configured as has been described heretofore.

Consequently, firstly, in the preparation step, the long round rod material 60 made of the structural carbon steel through hot rolling is subjected to the spheroidize-annealing treatment, and the long material 61 resulting from removing the decarburized layer from the outer circumferential surface of the long round rod material 60 by peeling is cut to the predetermined length to prepare the shaft-shaped material 62.

Then, the shaft-shaped material 62 from which the decarburized layer is removed is subjected sequentially to the coating treatment step, the cold forging step, the cutting step, the quenching treatment step and the polishing state in that order, thereby making it possible to produce the shaft member 1.

As a result, a step of removing the decarburized layer from the secondary cold forged part 65 by cutting can be made unnecessary, whereby the shaft member 1 can easily be produced by suppressing the cutting margin of the surface of the secondary cold forged part 65 to a required minimum level.

In addition, by employing the shaft-shaped material 62 which is annealed with the spheroidizing rate falling within a range from 50 to 80%, it is possible to prevent the reduction in hardenability while ensuring the cold forging properties of the shaft-shaped material 62.

Namely, when the spheroidizing rate is lower than 50%, the cold forging properties are reduced, and there are fears that the shaft member 1 cannot be formed into a desired shape. On the contrary, when the spheroidizing rate is higher than 80%, there is caused a drawback that time and electric power needed are increased in hardening the required portion of the secondary cold forged part 65 after cold forging. However, the drawback can be eliminated by employing the shaft-shaped material 62 which is annealed with the spheroidizing rate falling within a range from 50 to 80%.

In addition, in the sideways extrusion process in the general cold forging, when a material is extruded sideways without being restricted by a molding die, the material is extruded sideways as in substantially the same shape as an outside diameter of the material before it is extruded sideways (in this embodiment, the outside diameter of the intermediate shaft portion 20 of the primary cold forged part 64 shown in Fig. 5), and the portion which is extruded sideways comes to have a projecting shape. Thus, when forming a shape which is concave radially outwards or a complex shape, such a shape needs to be formed by being restricted by the molding die. However, since the frictional force between the sideways extruded portion and the molding die is increased, a molding failure such as a crack in a molded surface has to be taken into consideration, and the difficulty in molding is inherent in the sideways extrusion process in the general cold forging.

However, with the coated shaft-shaped material 63 which is used as a material which is to be extruded sideways in cold forging in this embodiment, the spheroidize-annealing is applied thereto to spheroidize carbon contents to thereby increase the ductility of the material, and by forming the coat of phosphate around the material, the frictional force generated with the cold forging die is reduced. Thus, the first flange surface joint portion 21f can be formed into the shape described above.

Additionally, in the rolling bearing device According to the first aspect of the invention, it is desirable that the flange surface shape at the boundary portion between the outer flange portion and the inner flange portion is formed into the step shape which surrounds the bolt seat surface portion of the hub bolt and in which the inner flange portion is thicker than the outboard flange portion.

According to this configuration, the flange surface shape at the boundary portion between the outer flange portion and the inner flange portion is formed into step shape which surrounds the bolt seat surface portion of the hub bolt and in which the inner flange portion is thicker than the outboard flange portion. By adopting this configuration, the variation in distance from the center of the hub bolt to the boundary portion between the outer flange portion and the inner flange portion can be reduced, and therefore, not only can the local stress concentration (the stress concentration) be suppressed which would otherwise be generated in the flange portion by the load inputted thereinto, but also the portion of the flange portion where the bolt seat surface portion of the hub bolt is disposed can be formed thin, thereby making it possible to realize a reduction in weight.

Thus, while the embodiment of the mode for carrying out the invention has been described heretofore, the rolling bearing device for wheel of the invention is not limited to the embodiment and hence can be carried out in various forms.

### DESCRIPTION OF REFERENCE NUMERALS

1 shaft member of rolling bearing device for wheel; 10 shaft portion; 11 large-diameter portion of shaft portion; 12 small-diameter portion of shaft portion; 15 end shaft portion of shaft portion; 17 crimped portion; 18 inner ring raceway surface; 19 seal surface; 20 intermediate shaft portion; 21 flange portion; 21 a inner flange portion; 21 b perpendicular surface; 21 c concavely curved surface portion (concavely-curved-inclining-surface-shape); 21d outer flange portion; 21e bolt seat surface supporting surface; 21f first flange surface joint portion; 21g second flange surface joint portion; 21h concavely curved surface portion; 21i convexly curved surface portion; 21j convexly curved surface portion; 22 rotor supporting surface; 23 flange base portion; 24 bolt hole; 27 hub bolt; 27a bolt seat surface portion; 30 fitting shaft portion; 31 brake rotor fitting portion; 32 wheel fitting portion; 33 end face of fitting shaft portion; 35 forged recess portion; 36 coat of lubricant; 41 angular ball bearing; 42 inner ring element; 44 inner ring raceway surface; 45 outer ring member; 46 outer ring raceway surface; 47 outer ring raceway surface; 48 vehicle body side flange; 49 annular space; 52 cage; 53 cage; 55 brake rotor; 56 seal member; 58 lip; 60 long round rod material; 61 long material; 62 shaft-shaped material; 63 coated shaft-shaped material; 64 primary cold forged part; 65 secondary cold forged part; A rolling bearing device for wheel.; T1 distance between concavely curved surface portion and proximal end portion of fitting shaft portion; T2 distance between normally formed inclined surface and proximal end portion of fitting shaft portion; R1 radius of curvature of arc shape; R2 radius of curvature of concavely curved surface portion; R3 radius of curvature of convexly curved surface portion; R4 radius of curvature of convexly curved surface portion; R5 radius of curvature of concavely curved surface portion.

## Claims

1. A rolling bearing device for a wheel, the device comprising:
a shaft member including:
a shaft portion on an outer circumferential surface of which an inner ring raceway surface is formed;
a fitting shaft portion formed at one end side of the shaft portion; and
a plurality of flange portions that are positioned between the shaft portion and the fitting shaft portion and that extend radially outwards in a radial direction, wherein a bolt hole in which a hub bolt is arranged penetrates through each of the flange portions,
wherein the flange portions are formed by cold forging,
wherein the each of the flange portions includes:
an outer flange portion provided in a radially outward area where the bolt hole penetrates therethrough; and
an inner flange portion provided in a radially inward area which extends radially inwards and continuously from the outer flange portion,
wherein the inner flange portion is formed thicker than the outer flange portion as seen in a cross section in an axial direction,
wherein a thickness-wise shape of the inner flange portion is formed into a concavely-curved-inclining-surface-shape in which a flange surface shape on a side where a bolt seat surface portion for the hub bolt is disposed is such that the thickness of the inner flange portion gradually decreases as it extends radially outwards from a radially proximal end portion, so that the inner flange portion is thickest on a range of predetermined length in the radial direction in the radially proximal end portion and the inner flange portion gradually decreases in thickness as it extends radially outwards, and
wherein the concavely-curved-inclining-surface-shape that is formed at the inner flange portion is formed as a surface shape in which the thickness of the inner flange portion decreases uniformly as it extends radially outwards with respect to a width direction which intersects an extending direction of the flange portion at right angles.

2. The rolling bearing device according to claim 1, wherein a flange surface shape at a boundary portion between the outer flange portion and the inner flange portion is formed into a step shape which surrounds the bolt seat surface portion for the hub bolt and in which the inner flange portion is thicker than the outer flange portion.
